# EUROPEAN PATENT APPLICATION

(11) **EP 0 855 530 A1**
(43) Date of publication of application: **29.07.1998**
(21) Application number: 96928697.0
(22) Date of filing: 30.08.1996
(51) Int. Cl.: F16D 3/18

(54) **FLEXIBLE GEAR COUPLING**

(71) Applicant: MITSUBISHI DENKI KABUSHIKI KAISHA, Tokyo 100 (JP)
(72) Inventor: SHIGEURA, Junichi, Mitsubishi Denki K.K., Tokyo 100 o 100 (JP)
(74) Representative: Popp, Eugen, Dr.
(86) International application number: JP9602430
(87) International publication number: WO9809088

(57) **Abstract**

A flexible gear coupling between a driving electric motor and a reduction device to transmit a driving force. Movable stoppers (8, 8') spaced from central plates (2, 2') with free spaces (c, c') therebetween and having an elasticity in the axial direction are planted in drive shafts (10, 10'), and stationary stoppers (1, 1') spaced from the central plates (2, 2') with free spaces (b, b') therebetween are provided on nuts (11, 11'). Accordingly, even when a maximum allowable displacement is increased, sleeves (5, 5') are not moved excessively, enabling smooth transmission of the driving force. Also, there is little possibility of communication of the inside with the outside of the coupling.

## Description

### TECHNICAL FIELD

This invention relates to a flexible gear coupling capable of transmitting a rotational force from a drive shaft to a driven shaft even when at least one of the drive and driven shafts is displaced.

### BACKGROUND ART

The gear coupling known as a flexible gear coupling has conventionally been used in connecting between a driving electric motor and a speed reduction device in a drive unit for a rail way vehicle, an automobile, a rolling mill or the like.

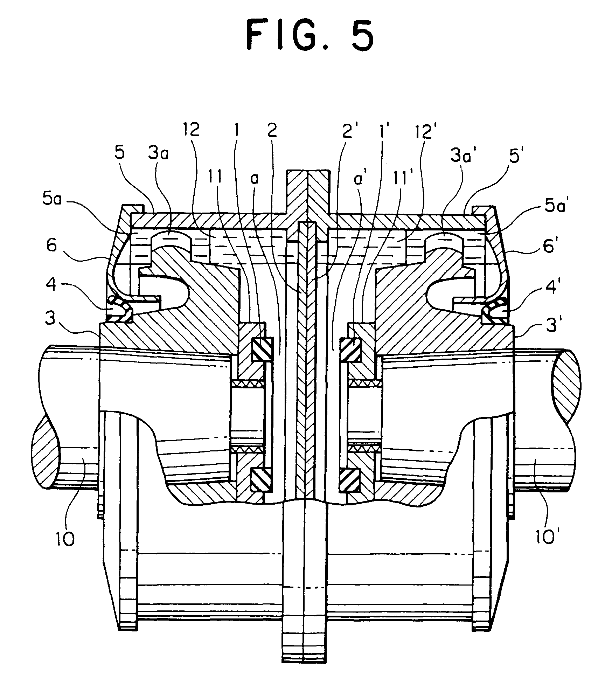

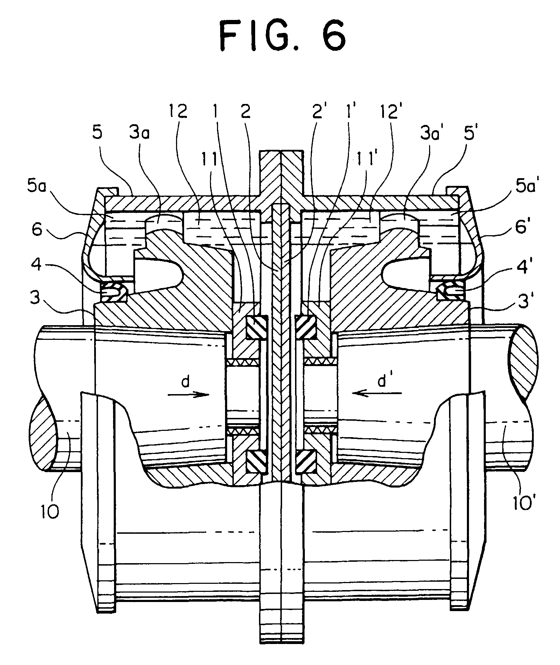

The following description will be made in terms of a flexible gear coupling in a drive unit of a railway vehicle as an example. For example, Japanese Utility Model Publication No. 47-14804 discloses a flexible gear coupling for connecting a driving electric motor and a speed reduction gear unit in a drive unit of a railway vehicle. Figs. 5 and 6 are sectional side views showing, by partially cutting away, the interior of a conventional flexible gear coupling similar to that disclosed in the above Publication. In Figs. 5 and 6, 1, 1' are fixed stoppers, 2, 2' are central plates, 3, 3' are pinions having outer teeth gears 3a, 3a 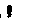 , 4, 4' are dust keepers, 5, 5' are sleeves having inner teeth gears 5a, 5a' and connected together through flanges, 6, 6' are end covers, 10 is a drive shaft of an unillustrated electric motor, 10' is a driven shaft connected to an unillustrated speed reduction gear device, 11, 11' are nuts, 12, 12' are grease, a, a 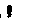 are free spaces in which the pinions 3, 3' and the sleeves 5, 5' can be freely moved relative to each other. The axial lengths of the drive shaft 10 and the driven shaft 10' in the free spaces a, a 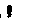 are as shown in Fig. 5 distances between the fixed stoppers 1, 1' and the central plates 2, 2' when the axes of the outer teeth gear 3a, 3a' and the inner teeth gears 5a, 5a' are brought into alignment. This distance is the distance through which the pinion 3, 3' are allowed to relatively move from the position shown in Fig. 5 relative to the sleeves 5, 5', when the maximum external force is applied to the drive shaft 10 and the driven shaft 10' and is equal to the maximum allowable displacement. It is to be noted that the maximum allowable displacement refers to a distance determined by the design specifications of the lay out structure of the unillustrated electric motor and the unillustrated speed reduction device.

The operation will now be described. When the unillustrated motor is driven under the condition shown in Fig. 5, the drive shaft 10 is rotated and the outer teeth gear 3a of the pinion 3 and the inner teeth gear 5a of the sleeve 5 mesh with each other to rotate the sleeve 5 together with the sleeve 5' connected to the sleeve 5 through the flange, which causes the rotation of the driven shaft 10' of which pinion 3' engages at the outer gear teeth 3a 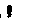 with the inner teeth gear 5' of the sleeve 5'. Then, even when at lease one of drive shaft 10 or driven shaft 10' displaces or tilts due to the external force during the travel of the unillustrated railway car, the drive force is smoothly transmitted from the drive shaft 10 to the driven shaft 10'. This also similarly applies when the drive shaft 10 and the driven shaft 10' are displaced in the direction other than that shown in Fig. 6 which will now be described. Fig. 6 illustrates one example of the position of the drive shaft 10 and the driven shaft 10' when they are displaced by an external force from the position shown in Fig. 5, in which the drive shaft 10 and the driven shaft 10' are respectively moved to the direction of d and d 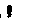 shown in Fig. 6. In this case, the fixed stoppers 1, 1' are adjacent to or in contact with the center plates 2, 2' and the dust keepers 4, 4' and the end covers 6, 6' are kept contacting. Therefore, it is not possible that dust enters from the exterior of the flexible gear coupling into the its interior and that the grease 12 leaks from the interior of the flexible gear coupling to its exterior.

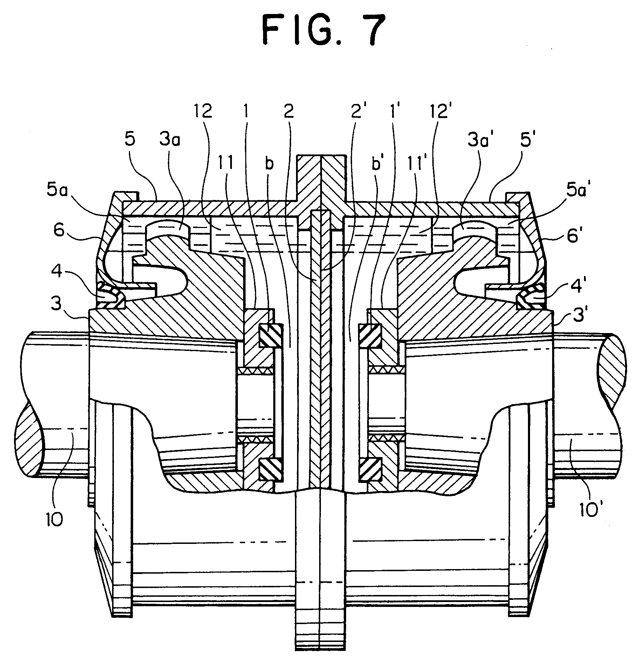

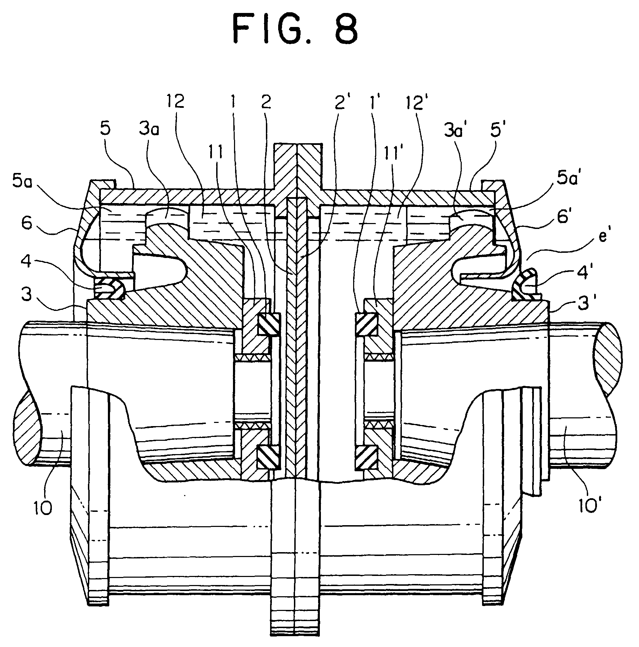

In recent years, it is desired that the electric motor be made large-sized for a higher speed railway vehicle and that the comfort of the ride of the railway vehicle be further improved. This means that the maximum displacement allowable distance of the drive shaft 10 and the driven shaft 10' is becoming longer. Figs. 7 and 8 are partly cut-away sectional side views showing the interior of the flexible gear coupling having a large maximum displacement allowable distance. In Figs. 7 and 8, the structure is the same as that of Fig. 5 except that the maximum displacement allowable distance is larger. In order to increase the maximum displacement allowable distance of the drive shaft 10 and the driven shaft 10', the axial lengths of the sleeves 5, 5' should be made long. That is, as shown in Fig. 7, free spaces b, b 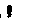 axially larger than the free spaces a, a' in the direction of the drive shaft 10 and the driven shaft 10' as shown in Fig. 7 may be provided. In a manner similar to the above operation, even when at lease one of drive shaft 10 and the driven shaft 10' displaces or tilts due to the external force during the travel of the unillustrated railway car, the drive force is smoothly transmitted from the drive shaft 10 to the driven shaft 10'. However, it is possible that dust enters from the exterior of the flexible gear coupling into the its interior and that the grease 12 leaks from the interior of the flexible gear coupling to its exterior. For example, Fig. 8 illustrates the state in which the drive shaft 10 and the driven shaft 10' do not change their positions from those shown in Fig. 7 and in which the center plates 2, 2' the sleeves 5, 5' and the end covers 6, 6' are displaced from the position shown in Fig. 7 to the left as viewed in Fig. 7. That is, even when no large external force is applied to the drive shaft 10 or driven shaft 10', it is possible that the sleeves 5, 5', displace over the maximum displacement allowable distance. Therefore, the fixed stopper 1 comes close to or into contact with the center plate 2, and the dust keeper 4' and the end cover 6' separate from each other. This causes a problem that a gap e 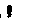 is generated between the dust keeper 4' and the end cover 6'. Also, at this time, the sleeves 5, 5' are moved unnecessarily, allowing a large vibration and resonance to be generated.

Further, another conventional flexible gear coupling will be described. For the sake of easy understanding of the description, Fig. 5 will be used in explanation. A proposition has been made that, for the purpose of providing the same function as that of the fixed stoppers 1, 1' shown in Fig. 5, springs for always urging the pinions 3, 3' to the drive shaft 10 and the driven shaft 10' be inserted between the center plates 2, 2' and the pinions 3, 3' in stead of the fixed stoppers 1, 1'. Other structure is similar to that shown in Fig. 5. In this case, since the springs are provided between the center plates 2, 2' and the pinions 3, 3', the springs must have a large weight. Also, since the springs always urge the pinions 3, 3' to the drive shaft 10 and the driven shaft 10', the center plates 2, 2' and the pinions 3, 3' are subjected to the spring force even during the normal operation in which no external force acts on the drive shaft 10 or the driven shaft 10', the springs sometimes vibrate to cause resonance. Therefore, it some times happen that a smooth transmission of the drive force from the drive shaft 10 to the driven shaft 10' is prevented.

The present invention has been made to solve the above problem and has as its object the provision of a flexible gear coupling in which, even when the maximum displacement allowable distance of the drive shaft and the driven shaft is increased, an unnecessary displacement of the sleeves can be suppressed to allow a smooth drive force transmission.

It is also the object of the present invention to provide a flexible gear coupling in which the maximum displacement allowable distance of the drive shaft and the driven shaft is large, the drive force can be smoothly transmitted and in which the possibility of its interior communicating with its exterior is small.

### DISCLOSURE OF THE INVENTION

The flexible gear coupling of the present invention comprises a drive shaft, a pinion secured to the drive shaft and having an outer teeth gear, a sleeve having an inner teeth gear engaging the outer teeth gear, a sleeve connected to one end of the sleeve and having an inner teeth gear, a pinion having an outer teeth gear and engaging the inner teeth gear, and a driven shaft to which the pinion is secured, wherein, when a maximum external force is applied to the drive shaft and the driven shaft, the pinions are allowed to displace relative to the sleeves within a free spaces over the maximum displacement allowable distance and a drive force is transmitted from the drive shaft to the driven shaft, and wherein the arrangement being such that the sleeve can be displaced relative to the pinion within a free space and that a movable stopper is provided, the movable stopper restricting the displacement of the sleeve so that, when the drive shaft is subjected to a force smaller than the maximum external force, the pinion is allowed to move relative to the sleeve over a distance smaller than the maximum displacement allowance distance relative to the sleeve, so that even when a maximum displacement allowable distance become longer, an unnecessary displacement of the sleeves is suppressed and a smooth power transmission can be achieved.

Also, the arrangement may be such that, when the sleeve is moved relative to the pinion within the free space, the end cover disposed to the sleeve and the dust keeper disposed to the pinion are maintained to be in contact with each other, so that the possibility of the inner space being communicated with the exterior is small.

Also, the arrangement may be such that, the movable stopper is planted into an end portion of the drive shaft with the free space intervening relative to the center plate, so that the flexible gear coupling having the above movable stopper can be realized without making it heavy.

Also, the arrangement may be such that, the movable stopper comprises a spring held by the drive shaft, and a spring and a shock absorbing member having one end in abutment with the spring and having the other end opposing to the center plate, so that it can be realized with a simple structure making the manufacture and assembly easy.

Also, the arrangement may be such that, a nut for securing the pinion to the drive shaft has provided therein a fixed stopper separated by the free space from the center plate, so that the movable stopper may have a small constraint force and the manufacture of the movable stopper is easy.

Also, the arrangement may be such that, the movable stopper is composed of an elastic member capable of contracting by at least a distance equal to the maximum displacement allowable distance minus an axial length of the free space in the direction of the drive shaft, so that the movable stopper can be realized with a simple structure.

Further, the arrangement may be such that the sleeve and the pinion can be displaced relative to each other within a free space and that a movable stopper is provided to both or the drive shaft and the driven shaft, the movable stopper restricting the displacement of the sleeve so that, when the drive shaft is subjected to a force smaller than the maximum external force, the pinion is allowed to move relative to the sleeve over a distance smaller than the maximum displacement allowance distance relative to the sleeve, so that, even when a maximum displacement allowable distance become longer, an unnecessary displacement of the sleeves is suppressed and a smooth power transmission can be achieved.

### BRIEF DESCRIPTION OF THE DRAWINGS

Fig. 1 is a sectional side view of the flexible gear coupling of the first embodiment of the present invention;
Fig. 2 is a sectional side view of the flexible gear coupling when the sleeve shown in Fig. 1 is displaced;
Fig. 3 is a sectional side view of the flexible gear coupling when the drive shaft and the driven shaft shown in Fig. 1 are displaced;
Fig. 4 is a sectional side view of the flexible gear coupling of the second embodiment of the present invention;
Fig. 5 is a sectional side view of a conventional flexible gear coupling;
Fig. 6 is a sectional side view of the flexible gear coupling when the drive shaft and the driven shaft shown in Fig. 5 are displaced;
Fig. 7 is a sectional side view of the flexible gear coupling having a longer maximum displacement allowable distance formed; and
Fig. 8 is a sectional side view of the flexible gear coupling when the sleeve shown in Fig. 7 is displaced.

### BEST MODE FOR CARRYING OUT THE INVENTION

In order to describe the present invention in more detail, a flexible gear coupling in a railway vehicle drive unit will now be described taken in conjunction with the accompanying drawings.

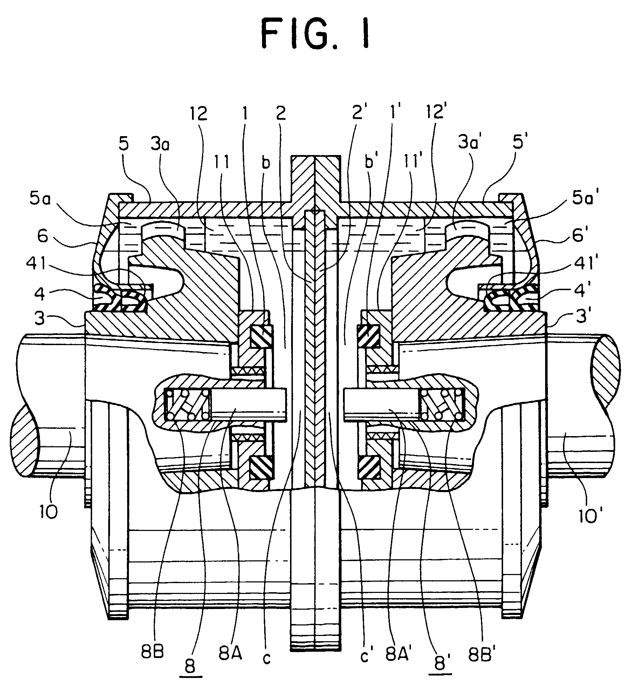

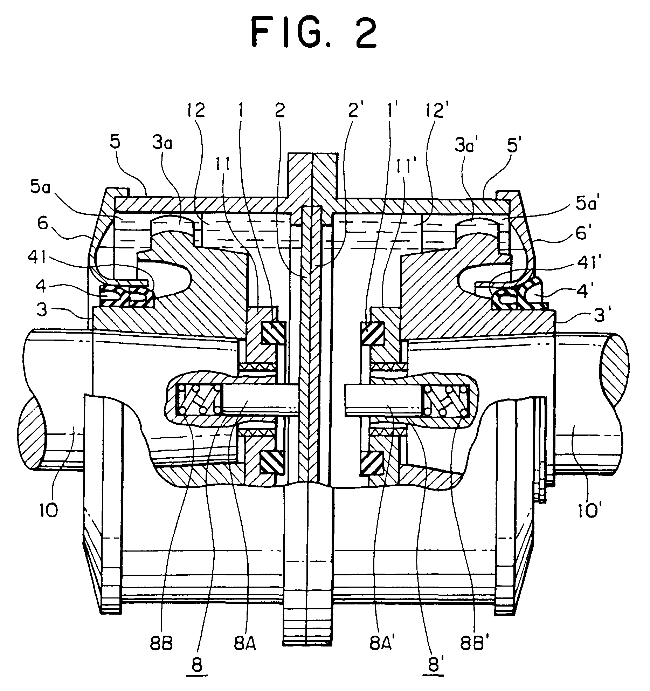

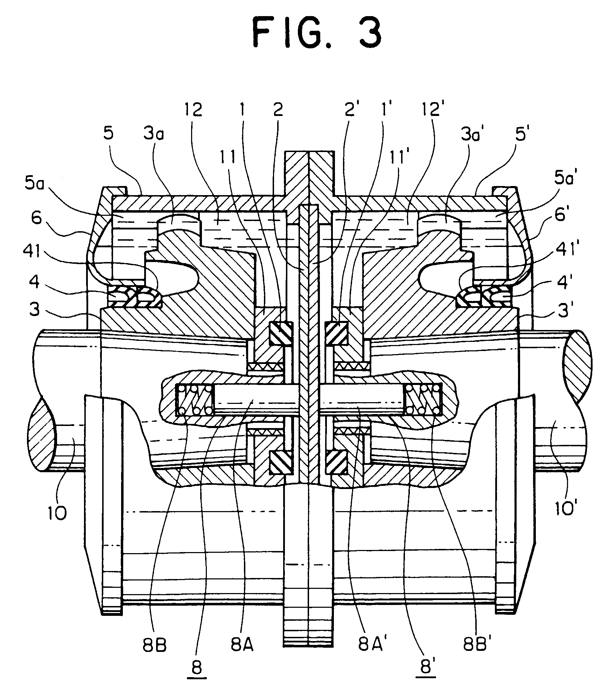

Figs. 1 - 3 are partly cut-away sectional side views showing the interior of the flexible gear coupling of the first embodiment of the present invention, Fig. 1 being a view showing the state in which the axial centers of the outer teeth gears 3a, 3a 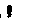 and the axial centers of the inner teeth gears 5a, 5a 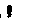 are coincide with each other, Fig. 2 being a view showing the state in which the sleeves 5, 5' are displaced in the leftward direction in the figure from the state shown in Fig. 1, Fig. 3 being a view showing the state in which the drive shaft 10 and the driven shaft 10' are displaced in the direction to become closer to each other by an external force. It is to be noted that the free spaces b, b' and the maximum displacement allowable distance are the same as those in the case of Fig. 7.

In Figs. 1 to 3, 1, 1' are the fixed stoppers fixed to the nuts 11, 11', 2, 2' are center plates secured to the sleeves 5, 5', 3, 3' are pinions having crowning-machined outer teeth gears 3a, 3a 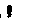 , 4, 4' and 41, 41' are dust keepers secured to the pinions 3a, 3a 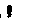 . The dust keepers 41, 41' are provided closer to the center than the dust keepers 4, 4'. The dust keepers 41, 41' are not always necessary and the description will be mainly made as to the case with no dust keepers 41, 41' are provided for the purpose of comparison with Fig. 7. 5, 5' are sleeves having inner teeth gears 5a, 5a 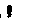 broader in teeth width than the outer teeth gears 3a, 3a 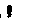 and flange-connected (by bolts for example) to each other. 6, 6' are end covers made of steel material and secured to the sleeves 5, 5'. The dust keepers 4, 4' and the end covers 6, 6' contact to each other, so that the entry of the dust from the exterior of the flexible gear coupling is prevented and the leakage of the grease 12 is prevented. 8, 8' are movable stoppers composed of shock absorbing members 8A, 8A 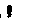 having a good wear resistivity and springs 8B, 8B 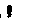 made of spring steel and are disposed with respect to the center plates 2, 2' with the free spaces c, c 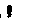 provided therebetween in the position shown in Fig. 1 The springs 8B, 8B 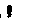 are supported at their one end by the drive shaft 10 and the driven shaft 10' and are in abutment at their the other end with the shock absorbing members 8A, 8A 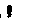 . 10 is the drive shaft of an unillustrated electric motor and its end portion is machined into a taper and has the movable stopper 8 planted therein. 10' is the driven shaft connected to an unillustrated speed reduction gear and its end portion is machined into a taper and has the movable stopper 8' planted therein. 11, 11' are nuts for securing the pinions 3, 3' to the drive shaft 10 and the driven shaft 10'. 12, 12' are grease for lubrication is are located as shown in Figs. 1 to 3 on the inner circumference side of the sleeves 5, 5' at the engaging position between the outer teeth gears 3a, 3a 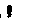 and the inner teeth gears 5a, 5a 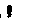 .

The fixed stoppers 1, 1', the dust keepers 4, 4' and the shock absorbing members 8A, 8A 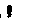 may preferably made of polytetrafluoroethylene (Teflon, a registered trademark of du Pont), nitrile rubber, nylon, fluorine rubber or the like, and the use of polytetrafluoroethylene is preferable when the use in a cold district is taken into consideration. Also, the shock absorbing members 8A, 8A 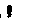 may be made of metal and, in this case, it is desirable that cupper which is a material softer than the center plates 2, 2' be used. The center plates 2, 2' may be made of a highly rigid material such as iron plates; reinforced plastics, glass fiber and the like. The pinions 3, 3', the sleeves 5, 5', the drive shaft 10 and the driven shaft 10' are made of a mechanical strong material such as chromium-molybdenum steel, nickel chromium-chromium-molybdenum steel, carbon steel and the like. Further, as shown in Fig. 1, the outer teeth gear 3a, 3a 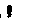 are crowning-machined, in which the teeth thickness is gradually decreased from the central portion of the teeth toward the both ends of the teeth and a suitable expansion is provided in the direction of the axis of the teeth, so that the pinions 3, 3' are allowed to displace in the axial direction and to tilt in the direction of its axis with respect to the sleeves 5, 5'.

b, b 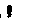 are the free spaces which are desired spaces in which the pinions 3, 3' and the sleeves 5, 5' can be freely displaced. However, the pinions 3, 3' are subject to a restriction by the movable stoppers 8, 8' under a predetermined condition as will be explained below. Also, the axial lengths of the drive shaft 10, the driven shaft 10' in the free spaces b, b 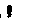 are distances between the fixed stoppers 1, 1' and the central plates 2, 2' when the central axis directions of the outer teeth gears 3a, 3a 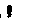 and the inner teeth gears 5a, 5a 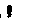 are coincide with each other as shown in Fig. 1. These distances are the distances in which the pinions 3, 3' can move relative to the sleeve 5, 5' from the position shown in Fig. 1 and are equal to the maximum displacement allowable distances. Here, the maximum displacement allowable distance refers to the distance that is determined according to the design specification of the lay out and structure of the unillustrated speed reduction gear and the unillustrated motor. When the pinions 3, 3' displace over the maximum displacement allowable distance relative to the sleeves 5, 5', the largest maximum external force acts on the drive shaft 10 and the driven shaft 10'. And an external force larger than the maximum external force acts to the drive shaft 10 and the driven shaft 10' only when a fault or an abnormality occurs. It is to be noted that the allowable distance is also taken into consideration when the drive shafts 10 and the driven shaft 10' tilt. For example, the maximum displacement allowable distance of the flexible gear coupling in a drive unit for a railway vehicle is several tens mm in the plus or minus direction in the axial directions of the drive shaft 10 and the driven shaft 10' with respect to the position shown in Fig. 1, and this value is determined by the specification and the layout of the unillustrated motor and the unillustrated vehicle wheel. c, c 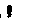 are free spaces which is a predetermined spaces in which the pinion 3, 3' and the sleeve 5, 5' are freely relatively movable. The axial lengths of the drive shaft 10 and the driven shaft 10' within the free space c, c 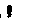 are distance between the movable stoppers 8, 8' and the central plates 2, 2' when the centers of the axial direction of the outer teeth gears 3a, 3a 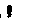 and the inner teeth gears 5a, 5a 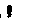 coincide with each other. And this is the distance determined such that the contacts between the dust keepers 4, 4' and the end covers 6, 6' are maintained when at least the movable stoppers 8, 8' are relatively moved within the predetermined distances c, c 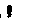 . For example, in the state shown in Fig. 1, these distances, i.e., the distances between the shock absorbing members 8a, 8a 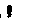 of the movable stoppers 8, 8' and the center plates 2, 2' may be selected to a distance of 1/4 - 3/4 of the distance between the fixed stoppers 1, 1' and the center plates 2, 2'. Also, similarly to the free spaces b, b 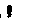 , the case in which the drive shaft 10 or the driven shaft 10' are tilted must be taken into consideration also as to the free spaces c, c 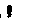 .

The spring 8B, 8B 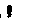 are selected to have spring constants that allow the shock absorbing members 8A, 8A 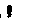 to be completely accommodated within the drive shaft 10, the driven shaft 10' and the nuts 11, 11' when the movable stoppers 8, 8' are moved over the maximum displacement allowable distance. The pressures (reaction forces) of the spring 8B, 8B 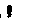 are usually selected to be equal to or more than 5 %, and preferably 10 - 100%, of the total weight of the sleeves 5, 5' and the floating portion secured thereto (the center plates 2, 2' and the end covers 6, 6'). The reason that this range is broad is because the required specification widely varies according to the operating speed of the railway vehicle, the railway abundant of straight sections or the railway abundant of curved portions.

The operation will now be described. It is to be noted in the following description that while the description will be made in terms of the case where the drive shaft 10, the driven shaft 10' and the sleeves 5, 5' are moved into the respective axial directions, it is also necessary to consider the case where the drive shaft 10 and the driven shaft 10' tilt. When the unillustrated motor is driven in the state shown in Fig. 1, the drive shaft 10 is rotated, the outer teeth gear 3a of the pinion 3 meshes with the inner teeth gear 5a of the sleeve 5 to rotate the sleeve 5, causing the sleeve 5' flange-connected to the sleeve 5 to rotate, and causing the inner teeth gear 5a 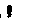 of the sleeve 5' to engage with the outer teeth gear 3a 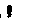 of the pinion 3' to rotate the driven shaft 10'. Also, even when at least one of the drive shaft 10 and the driven shaft 10' is displaced or tilted by an external force during the travel of the unillustrated railway vehicle, the drive force can be smoothly transmitted from the drive shaft 10 to the driven shaft 10'. Then, the description will be made as to the examples of the cases where there is no external force acting on the drive shaft 10 and the driven shaft 10' from the position shown in Fig. 1 and where the drive shaft 10 and the driven shaft 10 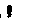 are displaced from the position shown in Fig. 1.

Fig. 2 shows one example where, during the ordinary operation, there is no displacement of the drive shaft 10 and the driven shaft 10' from the position shown in Fig. 1, but the center plates 2, 2', the sleeve 5, 5' and the end covers 6, 6' are moved to the left as seen in Fig. 1 from the position shown in Fig. 1. At this time, the movable stopper 8 contacts to the center plate 2 to restrict the movement of the center plate 2 by the spring 8B. In this position, the dust keeper 4, 4' and the end covers 6, 6' are contacting. Therefore, during the ordinary operation in which no forcing external force acts on the drive shaft 10 or the driven shaft 10', no space such as the space e 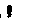 shown in Fig. 8 is formed. Also, since the movable stoppers 8, 8' are provided, unnecessary movement of the sleeves 5, 5' can be suppressed.

Also, the description will be made as to the case where the dust keepers 41, 41' are provided and the drive shaft 10 and the driven shaft 10' are moved from the position shown in Fig. 2 into the directions to separate from each other. At this time, even when the contacts between the end covers 6, 6' and the dust keepers 4, 4' are lost, the contacts between the end covers 6, 6' and the dust keepers 41, 41' can be maintained or, if the contacts are lost, the gap generated therebetween can be maintained small. Also, since the movable stoppers 8, 8' restrict unnecessary movements of the sleeves 5, 5', the dust keepers 41, 41' will not enter into the inside of the end covers 6, 6'. In other words, while it is conceivable that the dust keepers 41, 41' are attached to the flexible gear coupling shown in Fig. 7, since the distance of movement of the sleeves 5, 5' is large, the dust keepers 41, 41' may be allowed to enter into the inside of the end covers 6, 6' at a high probability. In order to avoid this, the contacting region between the end covers 6, 6' and the dust keepers 41, 41' may be made large, but this is disadvantageous in that the end covers 6, 6' become large.

Fig. 3 illustrates an example of the case where an external force is applied to the drive shaft 10 and the driven shaft 10' in the position shown in Fig. 1 so that the drive shaft 10 and the driven shaft 10' are displaced toward each other. At this time, the springs 8B, 8B 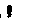 are compressed by the external force acting on the drive shaft 10 and the driven shaft 10' and the fixed stoppers 1, 1' come close to or contact with the central plates 2, 2'. At this time, the dust keepers 4, 4' and the end covers 6, 6' are contacting. Also, when the drive shaft 10 and the driven shaft 10' are displaced over the maximum displacement allowable distance due to the maximum external force, the springs 8, 8' are compressed and the fixed stoppers 1, 1' are brought into contact with the center plates 2, 2' to restrict the displacement of the drive shaft 10 and the driven shaft 10' exceeding the maximum displacement allowable distance. Therefore, the ingress of dust from the exterior of the flexible gear coupling into the interior thereof and the leakage of the grease 12 from the interior of the flexible gear coupling to the exterior thereof cannot take place. Also, when an external force acts on the drive shaft 10 and the driven shaft 10' to move the drive shaft 10 and the driven shaft 10' exceeding the free spaces c, c 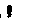 , the spring 8B, 8B 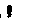 contract, so that the movable stoppers 8, 8' do not apply an excessively large force on the drive shaft 10 and the driven shaft 10'. Moreover, since the movable stoppers 8, 8' are provided, the springs 8B, 8B 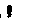 contract when an external force is applied, so that unnecessary displacement of the sleeves 5, 5' can be suppressed.

Since the flexible gear coupling is constructed as described above, a flexible gear coupling on be provided in which, even when the maximum displacement allowable distance of the drive shaft 10 and the driven shaft 10' is large, unnecessary displacement of the sleeves 5, 5' can be suppressed and the drive force can be smoothly transmitted. Further, since the free spaces c, c 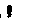 are provided between the movable stoppers 8, 8' and the central plates 2, 2 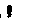 , possibility of resonating is very small and the smooth transmission of the drive force can be achieved. This is because the free spaces c, c 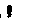 serve as plays of the springs 8B, 8B 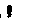 of the movable stoppers 8, 8' and, when no external force acts on the drive shaft 10 and the driven shaft 10', the springs 8B, 8B 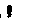 do not usually vibrate or resonate. Further, since the springs 8B, 8B 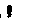 are planted into the drive shaft 10 and the driven shaft 10', their weight is small and it does not affect the flexible gear coupling even when the springs 8B, 8B 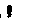 resonate.

Also, in the provided flexible gear coupling, the maximum displacement allowable distances of the drive shaft 10 and the driven shaft 10' are large and a smooth drive force transmission can be achieved and the possibility of its interior is communicating with the exterior.

Also, when the springs 8B, 8B 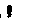 are selected to have the spring constants as described below, the fixed stoppers 1, 1' may be made unnecessary. That is, the spring is selected so that when the maximum external force is applied to the drive shaft 10 and the driven shaft 10', the end faces of the shock absorbing members 8A, 8A 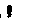 are in the same plane as that of the end faces of the nuts 11, 11' and that the springs 8B, 8B 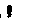 become at their shortest length (fully compressed) at this time.

Also, the description has been made as to the case where the movable stoppers 8, 8' are planted in the drive shaft 10 and the driven shaft 10'. However, since the movable stoppers 8, 8' are only required that it can restrict the displacement of the sleeves 5, 5', an arrangement in which the movable stoppers 8, 8' are fixed to the central plates 2, 2' and insertion holes for the movable stoppers 8, 8' are provided to the drive shaft 10 and the driven shaft 10' may also be used.

Also, the description has been made as to the case where the movable stoppers 8, 8' are provided to the drive shaft 10 and the driven shaft 10'. However, since the movable stoppers 8, 8' are only required that it can restrict the displacement of the sleeves 5, 5', an arrangement in which the movable stoppers 8, 8' are fixed to the parallel portions of the drive shaft 10 and the driven shaft 10', i. e., the outer portion of the flexible gear coupling may also be used. At this time, rings may be fixed to the parallel portions of the drive shaft 10 and the driven shaft 10' and the movement of these rings may be restricted.

Further, while the description has been made as to the case where the movable stoppers 8, 8' are disposed to both of the drive shaft 10 and the driven shaft 10', the arrangement in which the stopper may be provided on only one of the shafts.

Further, while the springs 8B, 8B 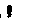 has been described as being coil springs, the springs 8B, 8B 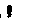 may be rubber springs, air springs or the like.

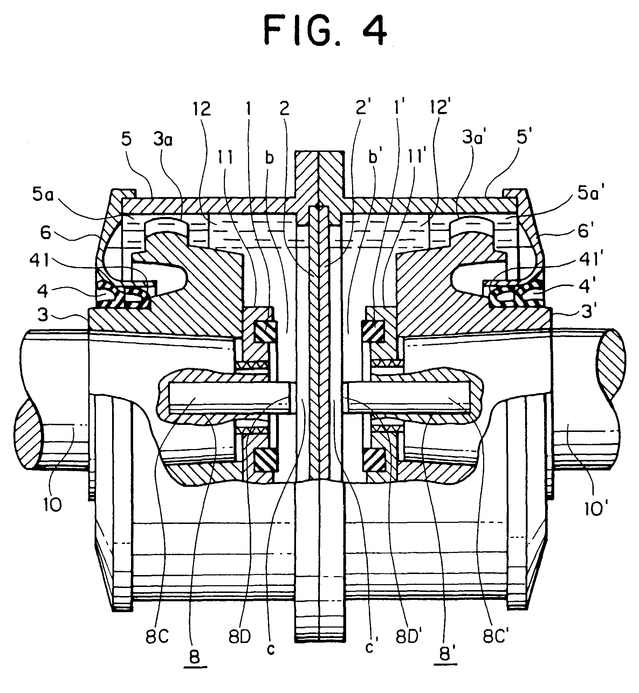

Fig. 4 is a partially cut away sectional side view showing the interior of the flexible gear coupling of the second embodiment of the present invention. In Fig. 4, 8, 8' are movable stoppers made mainly of a elastic member and are composed of elastic member portion 8C, 8C 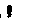 and the contact members 8D, 8D 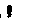 . The elastic members 8C, 8C 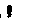 are made for example of sponge that can be compressed by a distance equal to at least the maximum displacement allowable distance minus the axial length of the drive shaft 10 and the driven shaft 10' within the free spaces c, c 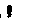 . The contact members 8D, 8D 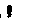 are made of a material having substantially no elasticity and are secured to the elastic member portions 8C, 8C 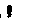 and brought into a surface contact with the central plates 2, 2'. In other respects, the structure and the function are similar to those of the first embodiment, so that their explanation will be omitted. In the arrangement of the second embodiment, the movable stoppers 8, 8' has simple structure, so that the assembly of the flexible gear coupling can be made easy.

### APPLICABILITY IN INDUSTRY

As has been described, the flexible gear coupling of the present invention is suitable to be used in a drive unit for example in the railway vehicle, the automobile, the rolling mill and the like as a drive force transmitting mechanism for connecting a driving electric motor and a speed reduction gear for transmitting a drive force therebetween.

## Claims

1. A flexible gear coupling, comprising: a drive shaft (10); a pinion (3) secured to said drive shaft (10) and having an outer teeth gear (3a) with crowning machining; a sleeve (5) having an inner teeth gear (5a) engaging said outer teeth gear (3a); a sleeve (5') connected to one end of said sleeve (5) and having an inner teeth gear (5a 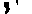 ); a pinion (3') having an outer teeth gear (3a 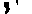 ) with crowning machining and engaging said inner teeth gear (5a 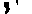 ); and a driven shaft (10') to which said pinion (3') is secured; wherein, when a maximum external force is applied to said drive shaft (10) and said driven shaft (10'), said pinions (3), (3') are allowed to displace relative to said sleeves (5), (5') within a free spaces (b), (b 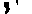 ) over the maximum displacement allowable distance and a drive force is transmitted from said drive shaft (10) to said driven shaft (10'); and wherein the arrangement being such that said sleeve (5) (or said sleeve (5')) and said pinion (3) (or said pinion (3')) can be displaced relative to each other within a free space (c) (or a free space (c 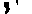 )) and that a movable stopper (8) (or a movable stopper (8')) is provided, said movable stopper restricting the displacement of said sleeve (5) (or said sleeve (5')) so that, when said drive shaft (10) (or said drive shaft 10')) is subjected to a force smaller than said maximum external force, said pinion (3) (or said pinion (3')) is allowed to move relative to said sleeve (5) (or said sleeve (5')) over a distance smaller than said maximum displacement allowance distance relative to said sleeve (5) (or said sleeve (5')).

2. The flexible gear coupling as claimed in claim 1, characterized in that the arrangement being such that, when said sleeve (5) (or said sleeve 5')) is moved relative to said pinion (3) (or said pinion (3')) within said free space (c) (or said free space (c 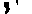 )), said end cover (6) (or said end cover (6')) disposed to said sleeve (5) (or said sleeve (5')) and said dust keeper (4) (or said dust keeper (4')) disposed to said pinion (3) (or said pinion (3')) are maintained to be in contact with each other.

3. The flexible gear coupling as claimed in claim 1, characterized in that the arrangement being such that, said movable stopper (8) (or said movable stopper (8')) is planted into an end portion of said drive shaft (10) (or said driven shaft (10')) with said free space (c) (or said free space (c 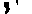 )) intervening relative to said center plate (2) (or said center plate 2')).

4. The flexible gear coupling as claimed in claim 3, characterized in that the arrangement being such that, said movable stopper (8) (or said movable stopper (8')) comprises a spring (8B) (or a spring (8B 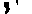 )) held by said drive shaft (10) (or said driven shaft (10')), and a spring (8A) (or the spring (8) and a shock absorbing member (8A 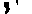 ) having one end in abutment with said spring (or said spring (8B 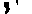 )) and having the other end opposing to said center plate (2) (or said center plate (2')).

5. The flexible gear coupling as claimed in claim 3, characterized in that the arrangement being such that, a nut (11) (or a nut 11')) for securing said pinion (3) (or said pinion (3')) to said drive shaft (10) (or said driven shaft (10')) has provided therein a fixed stopper (1) (or a fixed stopper (1')) separated by said free space (b) (or said free space (b 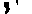 )) from said center plate (2) (or said center plate (2')).

6. The flexible gear coupling as claimed in claim 3, characterized in that the arrangement being such that, said movable stopper (8) (or said movable stopper (8')) is composed of an elastic member capable of contracting by at least a distance equal to said maximum displacement allowable distance minus an axial length of said free space (c) (or said free space (c 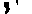 )) in the direction of said drive shaft (10) (or said driven shaft (10')).

7. A flexible gear coupling, comprising: a drive shaft (10); a pinion (3) secured to said drive shaft (10) and having an outer teeth gear (3a) with crowning machining; a sleeve (5) having an inner teeth gear (5a) engaging said outer teeth gear (3a); a sleeve (5') connected to one end of said sleeve (5) and having an inner teeth gear (5a 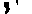 ); a pinion (3') having an outer teeth gear (3a 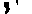 ) with crowning machining and engaging said inner teeth gear (5a 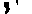 ); and a driven shaft (10') to which said pinion (3') is secured; wherein, when a maximum external force is applied to said drive shaft (10) and said driven shaft (10 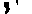 ), said pinions (3), (3') are allowed to displace relative to said sleeves (5), (5') within a free spaces (b), (b 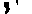 ) over the maximum displacement allowable distance and a drive force is transmitted from said drive shaft (10) to said driven shaft (10'); wherein the arrangement being such that said sleeve (5) and said pinion (3) can be displaced relative to each other within a free space (c) and that a movable stopper (8) is provided, said movable stopper restricting the displacement of said sleeve (5) so that, when said drive shaft (10) is subjected to a force smaller than said maximum external force, said pinion (3) is allowed to move relative to said sleeve (5) over a distance smaller than said maximum displacement allowance distance relative to said sleeve (5); and that said sleeve (5') and said pinion (3') can be displaced relative to each other within a free space (c 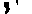 ) and that a movable stopper (8') is provided, said movable stopper restricting the displacement of said sleeve (5') so that, when said drive shaft (10') is subjected to a force smaller than said maximum external force, said pinion (3') is allowed to move relative to said sleeve (5') over a distance smaller than said maximum displacement allowance distance relative to said sleeve (5').
